# EUROPÄISCHE PATENTSCHRIFT

(11) **EP 2 647 813 B1**
(45) Veröffentlichungstag und Bekanntmachung des Hinweises auf die Patenterteilung: **15.02.2017**
(21) Anmeldenummer: 13002031.6
(22) Anmeldetag: 27.02.2013
(51) Int. Cl.: F02D 19/06

(54) **Vorrichtung zur Steuerung einer vollsequenziellen Gasanlage für Dieselmotoren insbesondere für Nutzfahrzeuge**
Device for controlling a fully sequential gas system for diesel engines, particularly for commercial vehicles
Dispositif de commande d'une installation de gaz entièrement séquentielle pour moteurs diesel, notamment pour véhicules utilitaires

(30) Priorität: 02.03.2012 DE 202012002091 U; 23.01.2013 DE 102013001167
(43) Veröffentlichungstag der Anmeldung: 09.10.2013
(73) Patentinhaber: Feldgebel, Peter, 68309 Mannheim (DE)
(72) Erfinder: Feldgebel, Peter, 68309 Mannheim (DE)

(56) Entgegenhaltungen:
- EP-A1- 2 330 282
- EP-A2- 1 255 033
- WO-A1-03/081009
- WO-A1-2007/104130
- WO-A1-2011/077715
- WO-A1-2012/089618
- WO-A2-01/59285
- WO-A2-99/45255
- DE-A1- 10 004 463
- DE-A1-102009 053 423
- DE-B3-102007 044 400
- GB-A- 2 285 144
- GB-A- 2 447 046
- JP-A- 2009 074 436
- US-A1- 2011 202 256
- US-B1- 8 095 294

## Beschreibung

Die Erfindung betrifft eine Vorrichtung zur Steuerung einer vollsequenziellen Gasanlage für Dieselmotoren insbesondere für Nutzfahrzeuge.

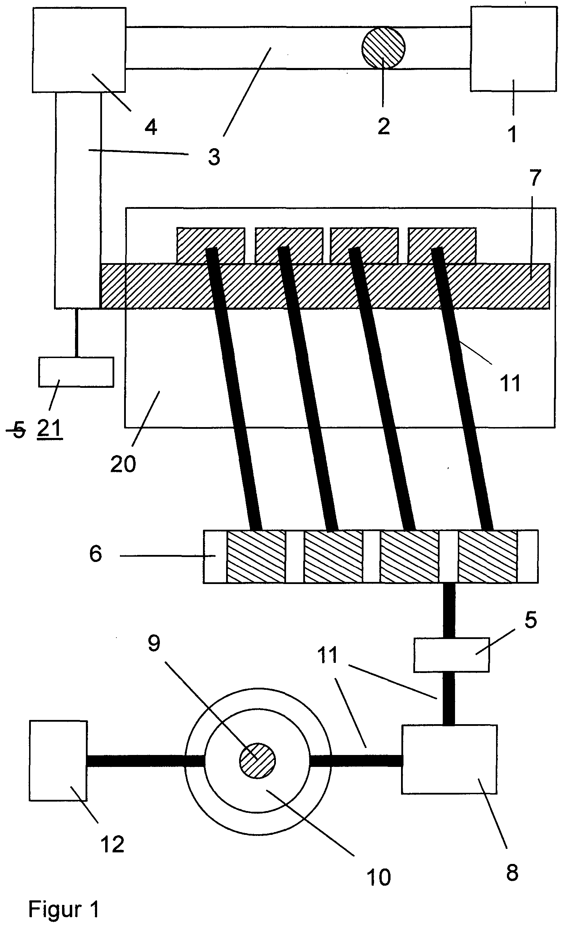

In bisherigen Autogasanlagen für Dieselmotoren wird das Flüssiggas im gasförmigen Zustand vor dem Kompressor bzw. Turbolader der Ansaugluft zugeführt (s. Fig. 1, in der Regel zwischen 1 und 2). Dadurch ist nach dem derzeitigen Stand der Technik bei Dieselmotoren nur eine Gasdosierung in der Form möglich, bei der alle Zylinder mit der gleichen Gasmenge versorgt werden. Aufgrund dieser Beschränkung ergibt sich auch die Tatsache, dass Fahrzeuge mit Dieselmotoren, die auf Autogasanlage umgerüstet werden, zur Zeit die Vorgaben für die Emissionswerte gemäß den Schadstoffklassen Euro 4, Euro 5 oder Euro 6 nicht erfüllen können.

Für eine Optimierung des Wirkungsgrades und zur Einhaltung der Emissionswerte gemäß der Abgasnormen Euro 4, Euro 5 und Euro 6 ist es wünschenswert, jeden Zylinder einzeln mit der benötigten Gasmenge zu versorgen. Die bisher im Dieselbetrieb erfassten Parameter sind jedoch für solch eine sequentielle Steuerung nicht ausreichend. Auch ist es notwendig, für jeden einzelnen Injektor den entsprechenden Betriebsdruck vorzuhalten, um jeden Zylinder separat mit der benötigten Gasmenge versorgen zu können.

WO 99/45255 A2 offenbart einen Dieselmotor, der auch mit gasförmigem Brennstoff betrieben werden kann.

Das Dokument (D1) "WO 2007/104130 A1" vom 20. September 2007 beschreibt ein Dosierungsverfahren, um einen Dieselmotor mit alternativen Kraftstoffen zu betreiben. Es handelt sich dabei um Kraftstoffe, die bei Umgebungstemperaturen und unter Normaldruck in gasförmiger Form vorliegen, bei höheren Drücken allerdings eine flüssige Phase bilden, wie z.B. auch Flüssiggas. Das Dokument offenbart, dass der alternative Kraftstoff unter hohen Drücken im Tank gespeichert wird und dann über eine Hochdruckpumpe den Injektoren der Dieselanlage zugeführt wird und über diese Injektoren in die Brennkammer gelangt. Auch die im Dokument angeführte Zeichnung Figur 6 bestätigt, dass die Zufuhr des Kraftstoffes unter Druck über die Dieselinjektoren erfolgt und somit in flüssiger Form der Brennkammer zugeführt wird. Für diese Zufuhr ist für die Kraftstoffdosierung eine Steuerung notwendig, die den Zylinderinnendruck berücksichtigt. Daher werden diese Werte zur Regelung der Injektoren der Dieselkraftstoffanlage verwendet.

In einem weiteren Dokument (D2) "GB 2 447 046 A" vom 03. September 2008 wird eine Steuerungseinheit für einen dualen Betrieb von Diesel und Flüssiggas beschrieben. Wie aus der aufgeführten Zeichnung Figur 1 zu entnehmen ist, wird dieses Steuergerät zwischen Motorsteuergerät und Dieselinjektoren zwischen geschaltet und übernimmt die Regelung für alle Injektoren, sowohl für die Gas- als auch die Dieselkraftstoffzufuhr. Es empfängt dafür Signale vom Motorsteuergerät, die weiter verarbeitet werden. Diese Steuerungseinheit ist ein Bestandteil des Dieselmotors.

Im Dokument (D3) "WO 03/081009 A1" vom 02. Oktober 2003 wird die Kommunikation zweier Steuergeräte nach dem Master-Slave-Prinzip beschrieben. Es liegt hierbei ein voneinander abhängiges System vor.

Das Dokument (D4) "DE 100 04 463 A1" vom 07. Dezember 2000 beschreibt eine Regelung eines Krafteinspritzsteuersyrstems für komprimiertes natürliche Gas (CNG) bei Benzinmotoren, wobei der Ausfallsicherungs-Steuerbetrieb ausgeführt wird, um die Sicherheit des Fahrzeuges sicherzustellen. Eine entsprechende Steuerung zur Sicherheit des Fahrzeuges ist beim Betrieb eines Dieselmotors nicht nötig.

Diese Aufgabe, nämlich den Wirkungsgrad zu optimieren und die Emissionswerte gemäß der Abgasnormen einzuhalten, wird nun durch die vorliegende Erfindung gelöst.

Die erfindungsgemäße Vorrichtung besteht aus einer Injektorleiste (6), die jeden einzelnen Zylinder separat mit der benötigten Gasmenge versorgt. Dabei kann es sich um mechanisch, elektrisch, magnetisch oder piezoelektrisch gesteuerte Injektoren handeln. Die Gaszufuhr erfolgt, indem Flüssiggas aus dem Tankbehälter über einen Verdampfer (LPG) oder Druckregler (CNG) in den gasförmigen Zustand überführt wird. Anschließend gelangt es über ein Filtersystem direkt zu den Injektoren, wobei vor der Injektorleiste eine Druckmessung (21) zur Regelung vorgenommen wird. Dabei wird jeder Zylinder einzeln angesteuert (11) und mit der jeweils benötigten Gasmenge versorgt.

Im Unterschied zum offenbarten Stand der Technik erfolgt bei der vorliegenden Erfindung die Regelung der Gaszufuhr über Injektoren (11), die zur Gasanlage gehören und keine Komponente des Dieselmotors (20) sind, als auch über eine Gassteuerelektronik (19), die unabhängig vom Dieselmotor arbeitet, indem sie selbständig die Sensorsignale erfasst und verarbeitet.

Die Regelung der Gaszufuhr erfolgt somit über eine gesonderte Gassteuerelektronik (19). Dazu wird erfindungsgemäß ein Drucksensor (5) benötigt, der den Druck der komprimierten Ansaugluft (3) ermittelt. Weiterhin erfolgt eine Druckmessung der zugeführten gasförmigen Flüssiggaskomponente an einem Druckmessgerät (21) vor der Injektorleiste (6).

Ebenfalls neu für die Steuerung der Gasanlage im Dieselbetrieb ist die Signalerfassung über einen Klopfsensor (15).

Insgesamt erfasst und verarbeitet die Steuereinheit folgende Signale und Parameter über dafür geeignete Sensoren: Signale des Klopfsensors (15), Signale des Kurbelwellensensors (16), Signale vom CAN-Bus (17), Druckmessung in der Ansaugluft (5/3), Signale des Fußpedalsensors sowie der Einspritzpumpe, Signale der Lamdbasonde (18), Parameter, die im Abgasstrang gemessen werden, wie Temperatur, Druck, NOₓ-Gehalt, HC und O₂-Gehalt.

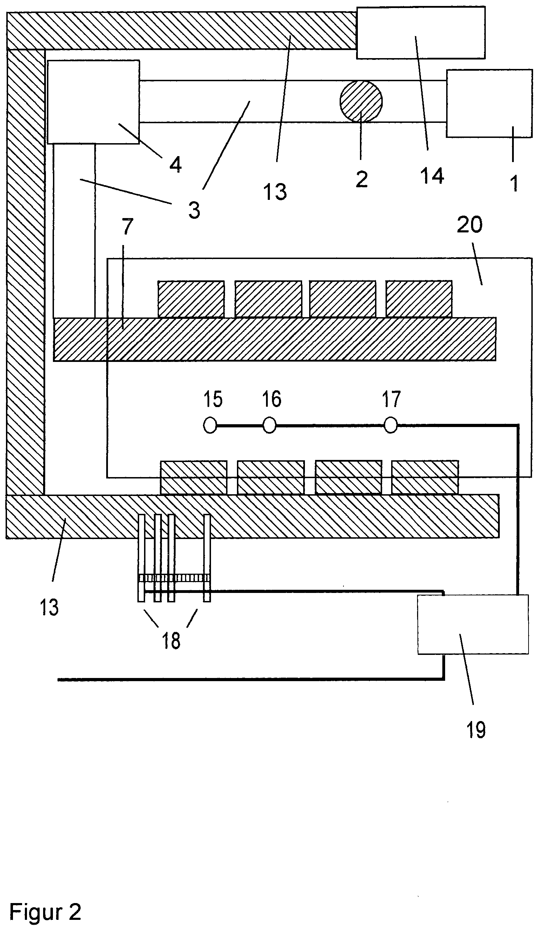

Eine erfindungsgemäße Ausführung einer Autogasanlage für Dieselmotoren ist in den Figuren 1 und 2 dargestellt.

Beschreibung und Beschriftung der Zeichnungen:
Figur 1 skizziert einen Querschnitt durch einen Dieselmotor mit einer Autogasanlage
Figur 2 skizziert im Querschnitt die Einheiten für die Steuerung

1. Luftfilter
2. Kompressor / Luftpresser oder Turbolader
3. Luftleitungen mit Druck
4. Intercooler
5. Druckmessung für Gasanlage
6. Injektor für jeden Zylinder einzeln
7. Ansaugbrücke Motor
8. Gasphasenfilter
9. Verdampfer - LPG oder Druckregler CNG
10. Unterdruckanschluss / Druckanschluss
11. Gasleitungen Gasphase
12. Sicherheitsventil / Filter Flüssigegasphasse
13. Abgasstrang
14. Auspuff, Katalysator & oder Nachbechandlungssysteme
15. Klopfsensor
16. Kurbelwellensensor
17. CAN Bus
18. Temperatur, Druck-, Lambda-, Nox, HC, 02 Sensoren
19. Gassteuerelektronik
20. Dieselmotor
21. Drucksensor

## Patentansprüche

1. Vorrichtung zur Steuerung einer Gasanlage für Dieselmotoren (20) insbesondere für Nutzfahrzeuge, indem gasförmiger Kraftstoff den Zylindern geregelt zugeführt wird, **dadurch gekennzeichnet, dass** die Regelung über eine gesonderte Gassteuerelektronik (19) im Dieselbetrieb erfolgt und über Injektoren (6) der Gasanlage die Zylinder sequentiell mit Gas versorgt, indem die Gassteuerelektronik (19) zur Steuerung der Gaszufuhr die Signale vom CAN-Bus (17) einliest und verarbeitet, sowie die Signale der Klopfsensoren (15), der Kurbelwellensensoren (16), des Fußpedalsensors, der Einspritzpumpe, der Lambdasonde (18), der MAF-Drucksensoren (21) und Drosselklappensignale, als auch den Druck der komprimierten Ansaugluft sowie den Druck der gasförmigen Phase vor der Injektorleiste (6) und die Temperatur- und Druckwerte im Abgas erfasst und verarbeitet.

2. Vorrichtung nach Anspruch 1,
**dadurch gekennzeichnet,**
**dass** die Gassteuerung die Injektoren (6) sequentiell mit einem Gasdruck je nach Ansaugkollektordruck versorgt vorzugsweise von 3 bar oder mehr.

3. Vorrichtung nach Anspruch 1
**dadurch gekennzeichnet,**
**dass** die Werte der Sensoren von der Gassteuerelektronik erfasst und emuliert an die Dieselmotorsteuerelektonik zur Regelung der Dieseldosierung weitergeleitet werden und über die Gassteuerelektronik anstelle der ausgeschnittenen Dieselmenge Gas zugeführt wird.

4. Vorrichtung nach Anspruch 1
**dadurch gekennzeichnet,**
**dass** die Gasanlage mit Flüssiggas (LPG) oder Erdgas (CNG) betrieben wird.

## Claims

1. Device for the control of a gas system for diesel engines (20), in particular for commercial vehicles, in which the gaseous fuel is guided to the cylinders in a regulated manner,
**characterised in that**
the regulation is achieved by means of separate gas control electronics (19) during diesel operation and the cylinders are sequentially supplied with gas via injectors (6) in the gas system, **in that** the gas control electronics (19) reads and processes the signals from the CAN bus (17) in order to control the gas supply and records and processes the signals of knock sensors (15), crankshaft sensors (16), foot pedal sensors, the injection pump, the lambda sensor (18), the MAF pressure sensors (21) and throttle position signals and the pressure of the compromised intake air and the pressure of the gaseous phase before the injector bracket (6) and the temperature and pressure values in the exhaust gas.

2. Device in accordance with Claim 1,
**characterised in that**
the gas control of the injectors (6) sequentially supplies the injectors (6) with a gas pressure depending on the intake collector pressure, preferably 3 bar or more.

3. Device in accordance with Claim 1,
**characterised in that**
the values of the sensors are recorded by the gas control electronics and forwarded to the diesel engine control electronics in an emulated manner to regulate the diesel dosing and gas is supplied via the gas control electronic instead of the cut-out quantity of diesel.

4. Device in accordance with Claim 1,
**characterised in that**
the gas system is operated with liquid gas (LPG) or natural gas (CNG).

## Revendications

1. Dispositif pour la commande d'une installation à gaz pour moteurs diesel (20), surtout pour des véhicules utilitaires en ce fournissant un carburant gazeux de manière régulée aux cylindres,
en ce caractérisé que
le réglage est assuré par une électronique de commande du gaz (19) à part en fonctionnement diesel et en ce approvisionnant les cylindres en gaz de manière séquentielle par des injecteurs (6) de l'installation à gaz, en ce l'électronique de commande du gaz (19) assurant la commande de l'alimentation en gaz importe et traite les signaux du bus CAN (17) et saisit et traite les signaux des capteurs de cliquetis (15), des capteurs du vilebrequin (16), du capteur de pédale, de la pompe à injection, de la sonde lambda (18), des capteurs de pression MAF (21) et des vannes papillon tout comme la pression de l'air aspiré comprimé ainsi que la pression de la phase gazeuse en amont de la rampe d'injecteurs (6) et les valeurs de température et de pression dans les gaz d'échappement.

2. Dispositif selon la revendication 1
en ce caractérisé que
la commande du gaz alimente les injecteurs (6) de manière séquentielle en une pression de gaz variant en fonction de la pression du collecteur d'aspiration, de préférence avec une pression de 3 bars et plus.

3. Dispositif selon la revendication 1
en ce caractérisé que
les valeurs des capteurs sont saisies par l'électronique de commande du gaz et transmis à l'électronique de commande du moteur diesel sous forme émulée pour le réglage du dosage du carburant diesel et que du gaz est alimenté par l'électronique de commande du gaz à la place de la quantité de diesel découpée.

4. Dispositif selon la revendication 1
en ce caractérisé que
que l'installation à gaz est exploitée avec du gaz liquide (GPL) ou avec du gaz naturel (GNC)
